# EUROPEAN PATENT APPLICATION

(11) **EP 4 625 975 A1**
(43) Date of publication of application: **01.10.2025**
(21) Application number: 24305438.4
(22) Date of filing: 25.03.2024
(51) Int. Cl.: H04N 19/103, H04N 19/157, H04N 19/174, H04N 19/196

(54) **VIDEO CODING: CODING PARAMETER RESTRICTIONS**

(71) Applicant: InterDigital CE Patent Holdings, SAS, 75017 Paris (FR)
(72) Inventor: BORDES, Philippe, 35890 LAILLE (FR); GALPIN, Franck, 35235 THORIGNE-FOUILLARD (FR); LE LEANNEC, Fabrice, 35830 BETTON (FR); URBAN, Fabrice, 35235 THORIGNE-FOUILLARD (FR)
(74) Representative: Interdigital

(57) **Abstract**

A method and an apparatus for encoding or decoding an image or a video are provided wherein for at least one block of at least one part of the image or video, coding parameters are determined for the at least one block among a set of coding parameters, wherein for at least one first coding parameter of the set, the at least one first coding parameter is allowed for encoding the at least one block when a percentage of blocks of the at least one part of the image or a percentage of reconstructed samples of the at least one part of the image that have been previously encoded using the at least one first coding parameter is below or equals to a first given value. The at least one block is then encoded or decoded using the determined coding parameters.

## Description

### TECHNICAL FIELD

The present embodiments generally relate to video compression. The present embodiments relate to a method and an apparatus for encoding or decoding an image or a video. More particularly, the present embodiments relate to improving video compression by relaxing some coding constraints locally.

### BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

### SUMMARY

According to an aspect, a method for encoding an image or a video is provided. The method comprises encoding at least one block of at least one part of an image of a video including:
determining coding parameters for the at least one block among a set of coding parameters, wherein for at least one first coding parameter of the set, the at least one first coding parameter is allowed for encoding the at least one block when a percentage of blocks of the at least one part of the image or a percentage of reconstructed samples of the at least one part of the image that have been previously encoded using the at least one first coding parameter is below or equals a first given value and encoding the at least one block using the determined coding parameters.

According to another aspect, an apparatus for encoding an image or a video is provided. The apparatus comprises one or more processors operable to encode at least one block of at least one part of an image of a video. The one or more processors are operable to determine coding parameters for the at least one block among a set of coding parameters, wherein for at least one first coding parameter of the set, the at least one first coding parameter is allowed for encoding the at least one block when a percentage of blocks of the at least one part of the image or a percentage of reconstructed samples of the at least one part of the image that have been previously encoded using the at least one first coding parameter is below or equals a first given value, and encode the at least one block using the determined coding parameters.

According to an aspect, a method for decoding an image or a video is provided. The method comprises decoding at least one block of at least one part of an image of a video including decoding coding parameters for the at least one block, the coding parameters being part of a set of coding parameters, wherein for at least one first coding parameter of the set, the at least one first coding parameter is allowed for decoding the at least one block when a percentage of blocks of the at least one part of the image or a percentage of reconstructed samples of the at least one part of the image that have been previously decoded using the at least one first coding parameter is below or equals a first given value, and reconstructing the at least one block using the decoded coding parameters.

According to another aspect, an apparatus for decoding an image or a video is provided. The apparatus comprises one or more processors operable to decode at least one block of at least one part of an image of a video. The one or more processors are operable to decode coding parameters for the at least one block, the coding parameters being part of a set of coding parameters, wherein for at least one first coding parameter of the set, the at least one first coding parameter is allowed for decoding the at least one block when a percentage of blocks of the at least one part of the image or a percentage of reconstructed samples of the at least one part of the image that have been previously decoded using the at least one first coding parameter is below or equals a first given value, and reconstruct the at least one block using the decoded coding parameters.

The above-mentioned aspects include the following variants or embodiments that can be used alone or in combination.

In a variant, the first given value is a bitstream specification conformant constraint defined in a profile or level specification of a video coding standard. In another variant, the at least one first coding parameter comprises at least one of: a first size of the block when the block is coded in intra mode, a second size of the block when the block is coded in inter mode, a coding mode that uses bi-prediction, a specific coding mode, a coding mode that uses reconstructed samples neighboring the block, a coding mode that uses a number of MAC per pixels that is above a second given value, a coding mode that uses an amount of memory that is above a third given value, a coding mode that uses a percentage of reconstructed samples coded in intra mode or in inter mode that is above a fourth given value, a coding mode that uses blocks coded in inter mode with local illumination compensation, an inter coding mode that has dependencies to other previously reconstructed blocks coded in inter mode, an intra mode in a P or B slice. In another variant, the at least one first coding parameter is a coding mode that uses data from blocks of the image that are located outside the at least one part of the image.

In some variants, the at least one part of the image is a sliding region in the image or a region in the image having a fixed size or a data processing region that comprises one of a coding tree unit, a group of coding tree units, a line of coding tree units, or a group of blocks of the image.

In a variant, responsive to a determination that the percentage of blocks of the at least one part of the image or the percentage of reconstructed samples of the at least one part of the image that have been previously encoded or decoded using the at least one first coding parameter is above the first given value, signaling a use of the at least one first coding parameter for the at least one block is omitted and the use of the at least one first coding parameter is inferred to be disabled.

In another variant, responsive to a determination that the percentage of blocks of the at least one part of the image or the percentage of reconstructed samples of the at least one part of the image that have been previously encoded or decoded using the at least one first coding parameter is above the first given value, the first coding parameter is disabled for the at least one block.

In another variant, a value of the first coding parameter is a value that provides a worst-case mode when encoding or decoding the at least one block using the first coding parameter. For example, in the following, a worst-case mode can be defined as follows: for a given coding mode (e.g.: intra, inter, inter with access to neighboring coded block parameter or reconstructed sample,... ), a worst-case mode is a configuration of the given coding mode that requires a highest number of MAC per pixel for reconstruction (e.g.: an intra coding mode that uses a smallest block size) or a configuration of the given coding mode that requires high dependencies for reconstruction (e.g.: an inter mode using reconstructed neighboring samples , the block encoding using the inter mode thus has dependencies with neighboring blocks) compared to some other coding modes. A configuration of the given coding mode is for example defined by the coding parameters of the given coding mode.

In a variant, responsive to a determination that the percentage of blocks of the at least one part of the image or the percentage of reconstructed samples of the at least one part of the image that have been previously encoded or decoded using the at least one first coding parameter is above the first given value, the value of the first coding parameter is changed to another value that does not provide a worst-case mode when encoding or decoding the at least one block using the first coding parameter.

In another variant, when determining or decoding coding parameters for the at least one block, accessing one or more types of data from at least one previously processed block is allowed only if the at least one previously processed block is located within the data processing region. In a further variant, when determining or decoding coding parameters for the at least one block, accessing one or more types of data from previously processed blocks that are located outside the data processing region is allowed for the at least one block responsive to a determination that a percentage of blocks of the data processing region or a percentage of reconstructed samples of the data processing region that have been previously encoded or decoded using the one or more types of data from previously processed blocks located outside the data processing region is below a fifth given value.

In another variant, wherein the one or more types of data from blocks of the image that are located outside the at least one part of the image comprises at least one of reconstructed samples of a previously processed block, a refined motion vector of a previously processed block, reconstructed samples of a previously processed block that has been coded using a given coding mode, samples of a previously processed block obtained at a given pipeline stage for encoding or decoding the previously processed block.

According to another aspect, a method for encoding an image or a video is provided. The method comprising splitting an image of a video into at least two data processing regions, encoding at least one block of one of the at least two data processing regions comprising accessing data from previously processed blocks that are located outside the data processing region to which the at least one block belongs, wherein accessing data from previously processed blocks that are located outside the data processing region to which the at least one block belongs is responsive to determination that a percentage of blocks of the data processing region or a percentage of reconstructed samples of the data processing region that have been previously encoded or decoded using data from previously processed blocks located outside the data processing region is below a sixth given value.

According to another aspect, an apparatus for encoding an image or a video is provided. The apparatus comprises one or more processors operable to split an image of a video into at least two data processing regions, encode at least one block of one of the at least two data processing regions comprising accessing data from previously processed blocks that are located outside the data processing region to which the at least one block belongs, wherein accessing data from previously processed blocks that are located outside the data processing region to which the at least one block belongs is responsive to determination that a percentage of blocks of the data processing region or a percentage of reconstructed samples of the data processing region that have been previously encoded or decoded using data from previously processed blocks located outside the data processing region is below a sixth given value.

According to an aspect, a method for decoding an image or a video is provided. The method comprises splitting an image of a video into at least two data processing regions, decoding at least one block of one of the at least two data processing regions comprising accessing data from previously processed blocks that are located outside the data processing region to which the at least one block belongs, wherein accessing data from previously processed blocks that are located outside the data processing region to which the at least one block belongs is responsive to determination that a percentage of blocks of the data processing region or a percentage of reconstructed samples of the data processing region that have been previously encoded or decoded using data from previously processed blocks located outside the data processing region is below a sixth given value.

According to another aspect, an apparatus for decoding an image or a video is provided. The apparatus comprises one or more processors operable to split an image of a video into at least two data processing regions, decode at least one block of one of the at least two data processing regions comprising accessing data from previously processed blocks that are located outside the data processing region to which the at least one block belongs, wherein accessing data from previously processed blocks that are located outside the data processing region to which the at least one block belongs is responsive to determination that a percentage of blocks of the data processing region or a percentage of reconstructed samples of the data processing region that have been previously encoded or decoded using data from previously processed blocks located outside the data processing region is below a sixth given value.

The above-mentioned aspects include the following variants or embodiments that can be used alone or in combination. In a variant, at least one of the two data processing regions comprises one of a coding tree unit, a group of coding tree units, a line of coding tree units, a group of blocks or a line of blocks of the image. In another variant, accessing data from previously processed blocks that are located outside the data processing region to which the at least one block belongs is disabled if the type of the data belongs to a given set of types of data. In a further variant, the given set of types of data comprises at least one of reconstructed samples of a previously processed block, refined motion vector of a previously processed block, reconstructed samples of a previously processed block that has been coded using a given coding mode, samples of a previously processed block obtained at a given pipeline stage for encoding or decoding the previously processed block.

In another variant, accessing data of a given type from previously processed blocks that are located outside the data processing region to which the at least one block belongs is further responsive to determination that a percentage of blocks of the data processing region or a percentage of reconstructed samples of the data processing region that have been previously encoded or decoded using data of the given type from previously processed blocks located outside the data processing region is below a seventh given value.

In another variant, responsive to a determination that encoding or decoding the at least one block comprises selecting for the at least one block a set of coding parameters candidates , for example motion vector candidates, from among a list of candidates and a re-ordering of the candidates of the list uses reconstructed samples of previously processed blocks located outside the data processing region to which the at least one block belongs, re-ordering of the candidates of the list is disabled for the at least one block.

In another variant, responsive to a determination that encoding or decoding the at least one block comprises selecting for the at least one block a set of coding parameters candidates from among a list of candidates and a re-ordering of the candidates of the list uses reconstructed samples of previously processed blocks located outside the data processing region to which the at least one block belongs, re-ordering of the candidates of the list is enabled for the at least one block using a version of the samples of previously processed blocks located outside the data processing region to which the at least one block belongs that are obtained at a given pipeline decoding stage.

In another variant, responsive to a determination that encoding or decoding the at least one block comprises determining an intra direction prediction for the at least one block using a template of reconstructed samples belonging to one or more previously processed blocks located outside the data processing region to which the at least one block belongs, the reconstructed samples of the previously processed blocks located outside the data processing region to which the at least one block belongs are not used or the determining of the intra direction prediction for the at least one block using the template is disabled, or the determining of the intra direction prediction for the at least one block uses a version of the samples of previously processed blocks located outside the data processing region to which the at least one block belongs that are obtained at a given pipeline decoding stage.

One or more embodiments also provide a computer program comprising instructions which when executed by one or more processors cause the one or more processors to perform any one of the methods for encoding or decoding an image or a video according to any of the embodiments described herein. One or more of the present embodiments also provide a non-transitory computer readable medium and/or a computer readable storage medium having stored thereon instructions for encoding or decoding an image or a video according to the methods described herein.

One or more embodiments also provide a computer readable storage medium having stored thereon a bitstream generated according to the methods described herein.

One or more embodiments also provide a method and apparatus for transmitting or receiving the bitstream generated according to the methods described above.

According to an aspect, a device is provided that comprises an apparatus for decoding an image or a vidoe according to any one of the embodiments described above; and at least one of (i) an antenna configured to receive or transmit a signal, the signal including data representative of the image or video, (ii) a band limiter configured to limit the signal to a band of frequencies that includes the data representative of the image or video, or (iii) a display configured to display the image or video.

In a variant, the device comprises at least one of a television, a cell phone, a tablet, a set-top box.

### BRIEF DESCRIPTION OF THE DRAWINGS

FIG. 1A illustrates a block diagram of a system within which aspects of the present embodiments may be implemented according to an embodiment.
FIG. 1B illustrates a block diagram of a system within which aspects of the present embodiments may be implemented according to another embodiment.
FIG. 1C illustrates a block diagram of a system within which aspects of the present embodiments may be implemented according to another embodiment.
FIG. 2 illustrates a block diagram of an embodiment of a video encoder within which aspects of the present embodiments may be implemented.
FIG. 3 illustrates a block diagram of an embodiment of a video decoder within which aspects of the present embodiments may be implemented.
FIG. 4 illustrates an example of intra and inter CU reconstruction dependencies with other CUs in a VVC video coding scheme.
FIG. 5 illustrates an example of inter CU reconstruction dependencies with other CUs in an ECM implementation.
FIG. 6 illustrates an example of a method for encoding at least one block of a video according to an embodiment.
FIG. 7 illustrates an example of a method for decoding at least one block of a video according to an embodiment.
FIG. 8 illustrates an example of a method for determining coding parameters for a block of a video according to an embodiment.
FIG. 9 illustrates an example of a method for determining or decoding coding parameters for at least one block of a video according to another embodiment.
FIG. 10 illustrates an example of a method for encoding at least one block of a video according to another embodiment.
FIG. 11 illustrates an example of a method for decoding at least one block of a video according to another embodiment.
FIG. 12 shows two remote devices communicating over a communication network in accordance with an example of the present principles.
FIG. 13 shows the syntax of a signal in accordance with an example of the present principles.

### DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

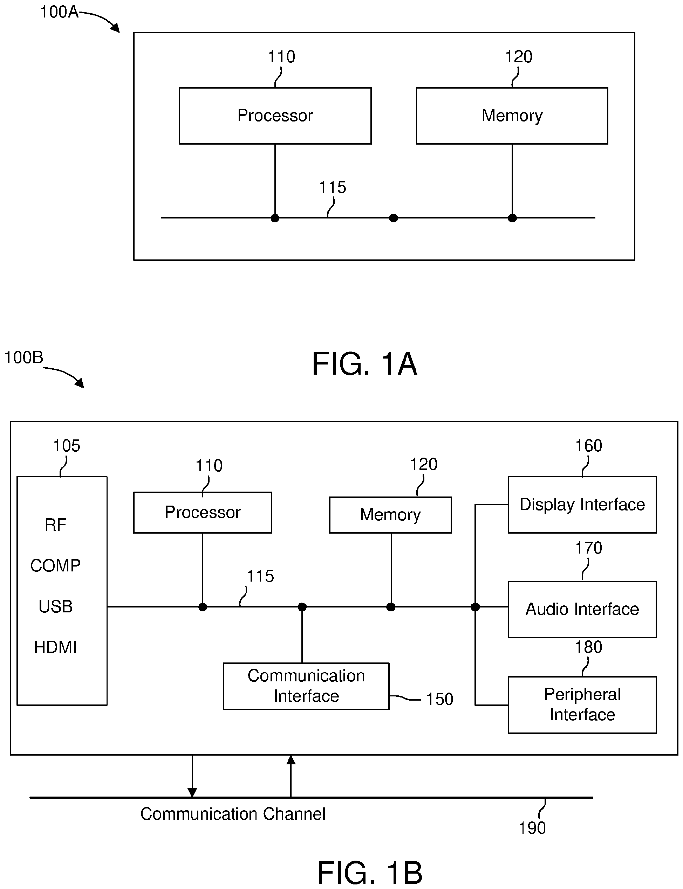

The aspects described and contemplated in this application can be implemented in many different forms. FIGs. 1A, 1B, 1C, 2 and 3 below provide some embodiments, but other embodiments are contemplated and the discussion of FIGs. 1A, 1B, 1C, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

FIG. 1A-1C illustrates block diagrams of examples of systems in which various aspects and embodiments can be implemented. Any one of the systems 100A, 100B or 100B may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. In various embodiments, the system 100A, 100B or 100C is communicatively coupled to other systems, or to other electronic devices, via, for example, a communications bus or through dedicated input and/or output ports. In various embodiments, the system 100A, 100B or 100C is configured to implement one or more of the aspects described in this application.

FIG. 1A illustrates a block diagram of an example of a system in which various aspects and embodiments can be implemented. The system 100A includes at least one processor 110 configured to execute instructions loaded therein for implementing, for example, the various aspects described in this application. Processor 110 may include embedded memory, input output interface, and various other circuitries as known in the art. The system 100A includes at least one memory 120, e.g., a volatile memory device, and/or a non-volatile memory device, including, but not limited to, EEPROM, ROM, PROM, RAM, DRAM, SRAM, flash, magnetic disk drive, and/or optical disk drive. The memory 120 may include an internal storage device, an attached storage device, and/or a network accessible storage device, as non-limiting examples. The processor 110 may be interconnected to the memory 120 by an interconnection bus 115.

Program code to be loaded onto processor 110 to perform the various aspects described in this application is subsequently loaded onto memory 120 for execution by processor 110.

In some embodiments, memory inside of the processor 110 is used to store program code instructions and to provide working memory for processing that is needed during encoding or decoding. The input to the elements of system 100A may be provided through various input devices (not represented). Both Processor 110 and memory 120 can also have one or more additional interconnections to external connections.

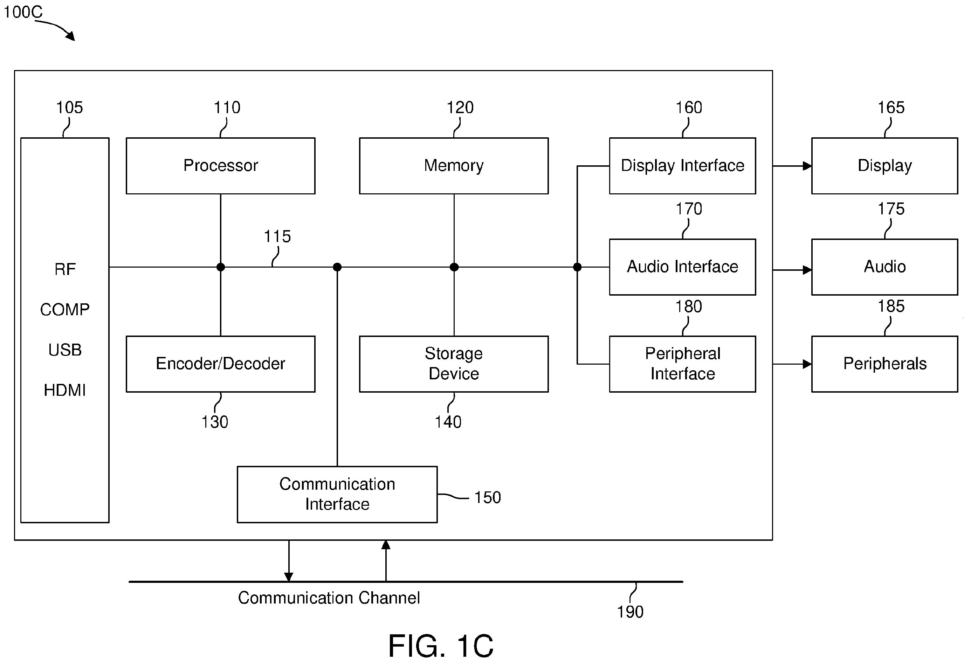

FIG. 1B illustrates a block diagram of an example of a system 100B in which various aspects and embodiments can be implemented. The system 100B includes the processor 110 and memory 120 as described in relation with FIG. 1A. The input to the elements of system 100B may be provided through various input devices as indicated in block 105 which is described further below with FIG. 1C. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B, include composite video.

The various elements may be interconnected and transmit data therebetween using suitable connection arrangement 115, for example, an internal bus as known in the art, including the 12C bus, wiring, and printed circuit boards.

The system 100B includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

The system 100B may provide an output signal to various output devices, including a display, speakers, and other peripheral devices. The output devices may be communicatively coupled to system 100B via dedicated connections through respective interfaces 160, 170, and 180. Alternatively, the output devices may be connected to system 100B using the communications channel 190 via the communications interface 150.

FIG. 1C illustrates a block diagram of an example of a system 100C in which various aspects and embodiments can be implemented according to another embodiment. Elements of system 100C, singly or in combination, may be embodied in a single integrated circuit, multiple Ics, and/or discrete components. For example, in at least one embodiment, the processing and encoder/decoder elements of system 100C are distributed across multiple Ics and/or discrete components.

The system 100C includes the processor 110 and memory 120 as described in relation with FIG. 1A or 1B.

System 100C includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100C includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100C or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input data (image, video, volumetric content), the decoded data (image, video, volumetric content) or portions of the decoded data, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for data encoding and decoding operations, such as for MPEG-2, HEVC (HEVC refers to High Efficiency Video Coding, also known as H.265 and MPEG-H Part 2), or VVC (Versatile Video Coding also known as H.266, standard developed by JVET, the Joint Video Experts Team).

The input to the elements of system 100C may be provided through various input devices as indicated in block 105, also mentionned in FIG. 1B. Such input devices of system 100B or 100C include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B or 1C, include composite video.

In various embodiments, the input devices of block 105 in system 100B or 100C have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna. Additionally, the USB and/or HDMI terminals may include respective interface processors for connecting system 100B or 100C to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/decoder 130 operating in combination with the memory and storage elements to process the data stream as necessary for presentation on an output device.

Various elements of the systems 100A, 100B or 100C may be provided within an integrated housing, Within the integrated housing, the various elements may be interconnected and transmit data therebetween using the suitable connection arrangement 115, for example, an internal bus as known in the art, including the 12C bus, wiring, and printed circuit boards.

Similarly as for the sytem 100B of FIG. 1B, the system 100C includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100B or 100C, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100B or 100C using a set-top box that delivers the data over the HDMI connection of the input block 105. Still other embodiments provide streamed data to the system 100B or 100C using the RF connection of the input block 105. As indicated above, various embodiments provide data in a non-streaming manner. Additionally, various embodiments use wireless networks other than Wi-Fi, for example a cellular network or a Bluetooth network.

The system 100C may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other devices. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100C. For example, a disk player performs the function of playing the output of the system 100C.

In various embodiments, control signals are communicated between the system 100C and the display 165, speakers 175, or other peripheral devices 185 using signaling such as AV.Link, CEC, or other communications protocols that enable device-to-device control with or without user intervention. The output devices may be communicatively coupled to system 100C via dedicated connections through respective interfaces 160, 170, and 180. Alternatively, the output devices may be connected to system 100C using the communications channel 190 via the communications interface 150. The display 165 and speakers 175 may be integrated in a single unit with the other components of system 100C in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

In any of the systems 100A, 100B or 100C, the embodiments can be carried out by computer program product comprising code instructions that implements any one of embodiments described herein. The computer program product may be computer software implemented by the processor 110 or by hardware, or by a combination of hardware and software. As a non-limiting example, the embodiments can be implemented by one or more integrated circuits. The memory 120 of any one of the systems 100A, 100B or 100C can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 of any one of the systems 100A, 100B or 100C can be of any type appropriate to the technical environment, and can encompass one or more of microprocessors, general purpose computers, special purpose computers, and processors based on a multi-core architecture, as non-limiting examples.

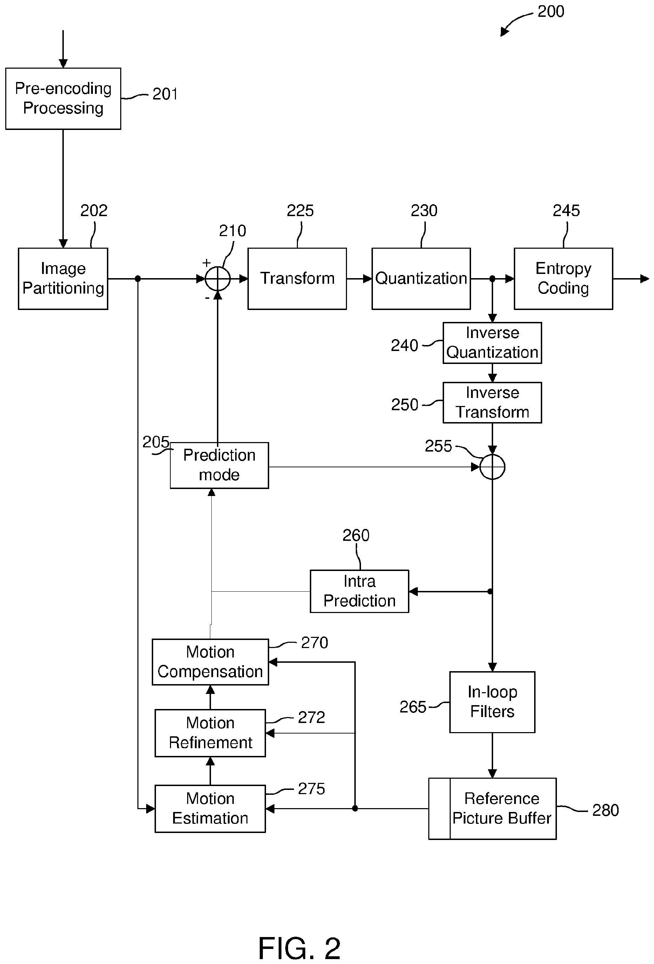

FIG. 2 illustrates an example of a block-based hybrid video encoder 200. Variations of this encoder 200 are contemplated, but the encoder 200 is described below for purposes of clarity without describing all expected variations.

In some embodiments, FIG. 2 also illustrate an encoder in which improvements are made to the HEVC standard or a VVC standard *(Versatile Video Coding, Standard ITU-T H.266, ISO*/*IEC 23090-3, 2020)* or an encoder employing technologies similar to HEVC or VVC, such as an encoder ECM (Enhanced Compression Model) under development by JVET (Joint Video Exploration Team).

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of color components), or re-sizing the picture (ex: down-scaling). Metadata can be associated with the pre-processing and attached to the bitstream.

In the encoder 200, a picture is encoded by the encoder elements as described below. The picture to be encoded is partitioned (202) and processed in units of, for example, CUs (Coding units) or blocks. In the disclosure, different expressions may be used to refer to such a unit or block resulting from a partitioning of the picture. Such wording may be coding unit or CU, coding block or CB, luminance CB, or block. A CTU (Coding Tree Unit) refers to a group of blocks or group of units or group of coding units (CUs). In some embodiments, a CTU may be considered as a block, or a unit as itself.

Each unit is encoded using, for example, either an intra or inter mode. When a unit is encoded in an intra mode, it performs intra prediction (260). In an inter mode, motion estimation (275) and compensation (270) are performed. The intra mode and/or the inter mode may comprise several distinct sub-modes. For example, the intra mode may comprise directional intra predictions, template-based intra mode derivation prediction, intra block copy prediction or others modes spatially predicting the samples values of the unit. The inter mode may comprise skip mode, merge mode according to which motion information is derived from a list of motion candidates and no motion vector prediction residual is encoded, an inter mode according to which motion information is derived from a list of motion candidates and further refined either by encoding motion vector prediction residual or by template-matching performed both at the encoder and the decoder, further inter modes are also possible. The encoder decides (205) which one of the intra mode or inter mode to use for encoding the unit. When different intra modes and/or inter modes are possible, the endoder decides (205) which of the intra modes or inter modes to use. The encoder indicates the intra/inter decision by, for example, one or more syntax element signaling the prediction mode. The encoder may also blend (205) intra prediction result and inter prediction result, or blend results from different intra/inter prediction methods. Prediction residuals are calculated, for example, by subtracting (210) the predicted block from the original image block.

The motion refinement module (272) uses already available reference picture in order to refine the motion field of a block without reference to the original block. A motion field for a region can be considered as a collection of motion vectors for all pixels with the region. If the motion vectors are sub-block-based, the motion field can also be represented as the collection of all sub-block motion vectors in the region (all pixels within a sub-block have the same motion vector, and the motion vectors may vary from sub-block to sub-block). If a single motion vector is used for the region, the motion field for the region can also be represented by the single motion vector (same motion vectors for all pixels in the region).

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes (reconstructs) an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, one or more of a deblocking filtering, an SAO (Sample Adaptive Offset) filtering or an ALF (Adaptive Loop Filter) filtering to reduce encoding artifacts. The filtered image is stored at a reference picture buffer (280). Such filtered image is also referred to as a reference image in the following.

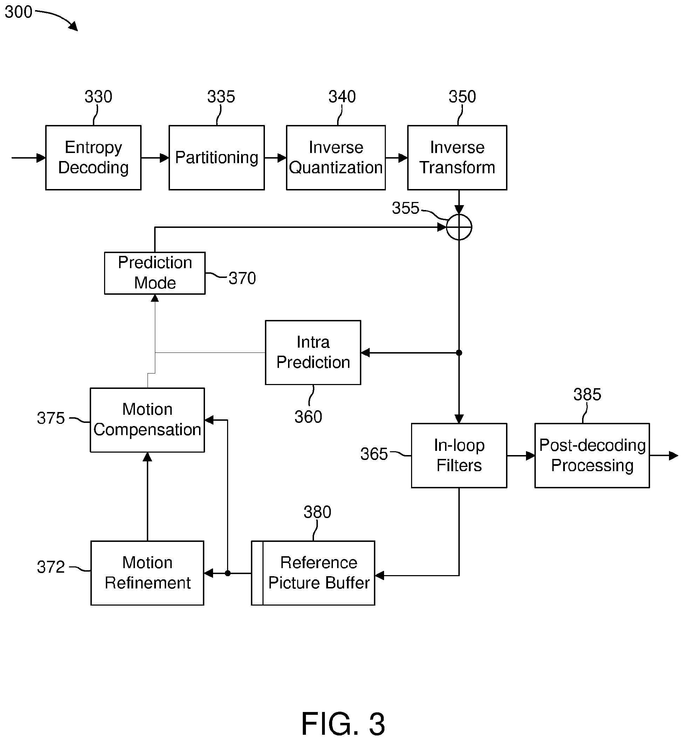

FIG. 3 illustrates a block diagram of a video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed.

The predicted block can be obtained (370) from intra prediction (360) or motion-compensated prediction (i.e., inter prediction) (375). In a similar manner as in the encoder, intra prediction and/or inter prediction may comprise several distinct sub-modes. The decoder obtains (370) the predictor block based on one or more syntax elements signaling the prediction mode among the available intra modes and inter modes. The decoder may blend (370) the intra prediction result and inter prediction result, or blend results from multiple intra/inter prediction methods. Before motion compensation, the motion field may be refined (372) by using already available reference pictures. In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201), or re-sizing the reconstructed pictures (ex: up-scaling). The post-decoding processing can use metadata derived in the pre-encoding processing and signaled in the bitstream.

Some of the embodiments described herein relates to encoding or decoding a video wherein complexity constraints, are adapted locally, for example, on a per block basis, depending on the processing of the previous blocks. The complexity constraints can relate to worst case limitations or processing pipeline dependencies. The complexity constraints can be relaxed under some circumstances or enforced.

Embodiments described herein can be implemented for instance in any module of a video encoder or a video decoder that produces, determines, encodes or decodes a parameter for encoding or decoding a block of the video. For instance, the embodiments described herein can be implemented in the image partioning module 202, motion refinement module 272, motion compensation module 270, intra prediction module 260, in-loop filters module 265, prediction mode module 205 of the video encoder 200 in FIG. 2 or in the partioning module 335, motion refinement module 372, motion compensation module 375, intra prediction module 360, in-loop filters module 365, prediction mode module 370, of the video decoder 300 in FIG. 3.

The development of new video coding algorithms with increased bit rate compression is made at the expense of increased complexity. The complexity may be measured as the number of elementary processing operations per second. For example, the number of MAC (multiplications and accumulations) per sample, number of cycles per sample, etc... For a given hardware technology, this is a bottleneck that cannot be exceeded. It can be overcome using multi-processors, but in this case the CU (de)coding algorithm(s) should not have dependencies with other CUs.

In general, since the modern video coding algorithms introduce many dependencies, one defines the worst case as the situation where all the CUs are coded at their minimal size and in sequential order. For example, the worst case of VVC standard *(Versatile Video Coding (VVC), ITU-T H.266 (ex H. VVC)* / *ISO*/*IEC 23090-3, 08*/*2020)* is defined as the case for an intra picture, where all the CUs are coded in 4x4 block, and for an inter picture, where all the CUs are coded in 8x8 block, because it corresponds to the maximal acceptable hardware limit given the state of the art capabilities. In general, in VVC, each coding mode has its own worst-case size (P. Bordes, F. Le L6annec, F. Galpin, T. Poirier, « Enabling tools for small blocks in small pictures," 15th Meeting: Gothenburg, document JVET-00447, SE, 3-12 July 2019*).*

Such worst cases are defined as hard worst cases because these limitations are defined in profile or levels of the video coding standard and a bitstream encoding a video compliant to a given profile and level of the video coding standard should not comprise data encoding with coding parameters that are beyond those limitations. For example, for VVC standard, the bitstream should not have blocks of size lower than 8x8 for inter pictures or blocks of size lower than 4x4 for intra pictures.

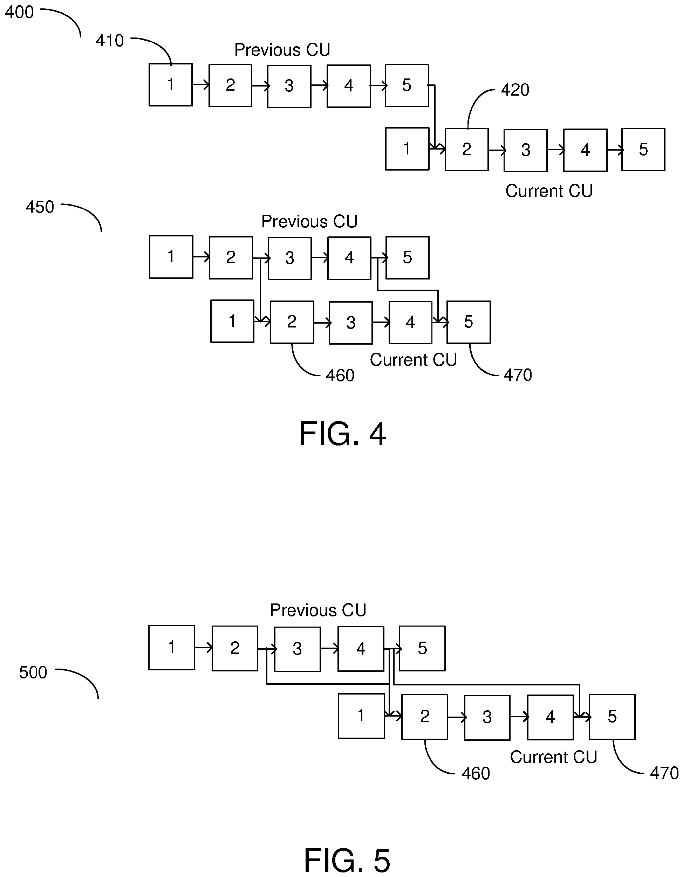

The traditional video codecs (e.g. ECM M. Coban, R.-L. Liao, K. Naser, J. Ström, L. Zhang, "Algorithm description of Enhanced Compression Model 10 (ECM 10)," document JVET-AE2025, 32nd Meeting, Hannover, DE, 13-20 October 2023*)* may have several kinds of inter-CU dependencies. FIG. 4 (400) depicts a simplified example of pipeline reconstruction stages for a CU coded in Intra mode. At step 1, the intra mode and residuals are decoded. At step 2, reference samples template is built with the neighboring CUs reconstructed samples. At step 3, the intra prediction is built according to the decoded intra mode. At step 4, residuals are added to the intra prediction. At step 5, CU borders are filtered, e.g. using OBMC (Overlapped Block Motion Compensation) if the CU's neighbor is in inter mode, and/or deblocking filter (DBF).

For an Intra coded CU (400), the current CU relies on the neighboring reconstructed samples (above and left) to build the intra prediction (420). This intra-dependency requires that the previous/adjacent CU has been entirely reconstructed before one can start building the current CU prediction (dependency with reconstructed samples starts at step 2 (420)).

FIG. 4 (450) depicts a simplified example of pipeline reconstruction stages for a CU coded in Inter mode. At step 1, inter mode and residuals are decoded. At step 2, motion vector candidates are built from neighborhood (dependency with reconstruction of the previous CU motion vectors (460)) and residuals are reconstructed. This reconstruction can use sign prediction that uses neighboring reconstructed samples. At step 3, motion compensation is performed to obtain the inter prediction of the current CU. At step 4, residuals are added to the inter prediction. At step 5, CU borders are filtered (470), e.g. using OBMC and/or DBF at left and above edges.

For a CU coded in inter mode (450), in VVC and former MPEG codec standards, the inter-CUs dependencies may be alleviated (compared to 400) since the CU can be (partially) reconstructed before the neighboring/adjacent CU samples have been completely reconstructed as depicted in FIG. 4 wherein dependency with reconstructed samples starts at block 5 (470).

It is to be noted that this is a simplified version for the purpose of explaining the principles of pipeline dependencies. Some other partial dependencies may exist such as vertical DBF filtering may depend on the horizontal DBF filtering of the above CU, and other in-loop post-filtering (ex: BIF for Bilateral Interpolation Filter, ALF for Adaptive Loop Filter) is not considered here.

In ECM software, for the CUs coded in inter, the step 2 (460) builds motion vector candidates from neighborhood (dependency with reconstruction of the previous CU motion vectors) and re-order the motion vector candidates (a.k.a. adaptive re-ordering with motion candidates ARMC) using the reconstructed samples of the previous CU (step 4 or 5). Such a re-ordering introduces stronger dependency with previous CU since the step (1) of the current CU should wait for the step 4 or 5 of the previous CU, as depicted in FIG. 5 (500).

The ECM software developed by JVET implements new coding tools with enhanced coding performance but with significantly higher complexity. They have also introduced additional pipeline dependencies, for example as explained with FIG. 5. These new constraints may be unacceptable for some practical use case (ex: (near or) real-time encoding/decoding, etc...) and/or for some hardware devices (set-top boxes, smartphones...).

Some embodiments described herein provides a method for encoding or decoding a video wherein some worst-case constraints are relaxed so that higher power demanding may be used temporally and/or locally during the picture encoding or decoding, but keeping the overall/total amount of processing below the actual hardware capability.

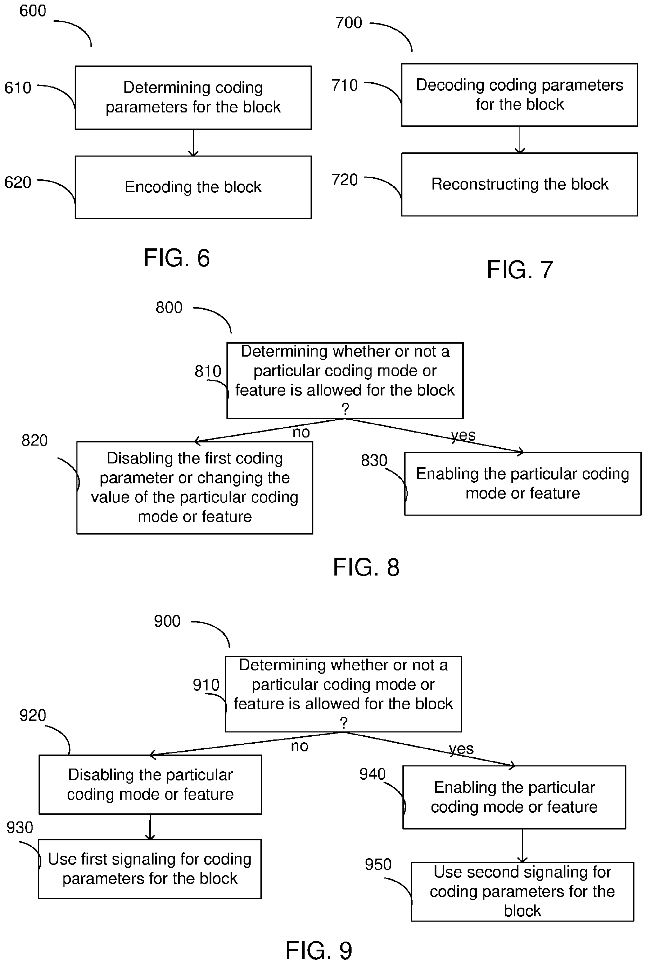

FIG. 6 illustrates an example of a method 600 for encoding at least one block of a video according to an embodiment. For at least one block of at least one part of an image of the video, at 610 coding parameters for the at least one block are determined among a set of coding parameters. Determining coding parameters for the at least one block can comprise determining a size for encoding the block, determining a splitting of the block into subblocks, determining a coding mode among a set of available coding modes such as intra prediction, inter prediction, determining a value of a feature of a coding mode, for example determining whether enabling or disabling a local illumination compensation tool, determining weights for weighted predictions, determining a transform size for the block, determining quantization parameters.

When determining coding parameters for the block, several coding parameters can be evaluated and coding parameters that provide a best rate/distortion cost is selected for encoding the block. According to the present principles, when determining coding parameters for the block, for at least one given coding parameter that is evaluated, it is determined whether or not the given coding parameter is allowed for encoding the at least one block. Such a determination depends on a percentage of blocks of the at least one part of the image or on a percentage of reconstructed samples of the at least one part of the image that have been previously encoded using the given coding parameter. When this percentage of blocks or of reconstructed samples is below a first value, the given coding parameter can be used and evaluated for the block, otherwise the given coding parameter cannot be used or its value is changed as will be described further below. At 620, the at least one block is encoded using the determined coding parameters.

FIG. 7 illustrates an example of a method 700 for decoding at least one block of a video according to an embodiment. For at least one block of at least one part of an image of the video, at 710 coding parameters for the at least one block are decoded and at 720, the at least one block is reconstructed using the decoded coding parameters. In one variant, the encoding of the block performed according to the method 600 of FIG. 6 may have no impact on the decoding of the block since the block is reconstructed using the decoded coding parameters. In another variant, as will described below, the decoding of the coding parameters can be impacted by the encoding of the block performed according to the method 600 of FIG. 6 for example when the syntax for encoding the block is adapted according to the result of the determination whether the given coding parameter is allowed or not for the block. In another variant, the syntax is not changed but some parts of the decoding process can be adapted according to the result of the determination whether the given coding parameter is allowed or not for the block, for example a certain amount of memory reserved during the decoding process can depend on whether or not the given coding parameter is allowed independently of whether or not it is effectively used by the block. Therefore, at 710, in some variants, it is determined whether or not the given coding parameter is allowed for the at least one block. Such a determination depends on a percentage of blocks of the at least one part of the image or on a percentage of reconstructed samples of the at least one part of the image that have been previously decoded using the given coding parameter. Similarly, as for the method of FIG. 6, when this percentage of blocks or of reconstructed samples is below the first value, the given coding parameter can be used for the block, otherwise the given coding parameter cannot be used or its value is changed as will be described further below.

In an embodiment, methods described above can be used when defining average worst-case limitation. In this embodiment, in order to alleviate the worst case limitations, some of the constraints implied by the worst case limitations are relaxed by defining a maximum amount of data processed in the worst case, for example a maximum relative amount of blocks coded in the worst case, that is the maximum amount of blocks that can be coded using the coding parameters that are defined as the worst case. The maximum amount of data processed in the worst case can be defined as a number of blocks or can be defined relative to a surface of the image, for example considering a number of samples of the image or of a part of the image that are processed in the worst case. Considering the number of samples allows to take into account the size of the blocks, not only the number of blocks in relaxing the worst-case limitations.

For example, in one variant, one may define a rule as the maximum relative number of CUs (ex: 50%) or the maximum relative number of reconstructed samples with a particular coding mode or a particular feature of a coding mode in one picture or slice. The particular coding mode or a particular feature of a coding mode corresponds to the given coding parameter as described in FIG. 6 and 7.

This maximum relative number N_{CU}-max of CUs or maximum relative number of reconstructed samples N_{S}-max can be a bitstream specification conformance constraint. It may be included in the profile/level definition of a video coding standard.

The particular coding mode or feature may be related to the CU size, CU coding mode, CU coding mode type (for example: a CU coding mode that access neighboring reconstructed samples), CU reconstruction complexity (for example: a CU coding mode with a number of MAC per pixels superior to a threshold, or a CU coding mode requiring some amount of memory superior to a threshold), CU coding mode dependency type (for example a CU coding mode that relies on a (relative) number of reconstructed samples coded in intra or inter superior to a threshold) or a combination of these parameters.

Examples of "particular coding mode or feature", that is example of the given coding parameter can be :
- the CU size (ex: 4x4 or 8x8) coded in intra mode (or inter mode), the CUs coded in bi-prediction mode,
- the CUs coded in inter mode with local illumination compensation (LIC) mode enabled, such a mode requires access to neighboring reconstructed samples,
- the CUs coded in inter mode with dependency to other previously reconstructed CUs coded in inter mode, for example when motion candidate list is required, or re-ordering of candidate in a list based on neighboring reconstructed samples,
- te CUs coded in intra mode in slice type P or B,
- ...

In a variant, one may define a region R where the rule should apply. The region may be a fixed grid of a given size or a sliding window of a given size. The region can be defined for example as a number of CTUs. The size of the region can be defined as a bitstream specification conformance constraint defined in a profile or level specification of a video coding standard.

This embodiment defining average worst-case limitation has the advantage to relax the constraint on minimum CU size for a given coding mode. For example, the minimum CU size for a particular coding mode (ex: inter mode, intra mode, Geometric partitioning mode, ...) could be decreased (ex: 4x4 for inter mode, etc...) compared to the current limitations for example, but with relative number of CUs/samples per image or per region R using this coding mode with this minimum size being inferior to a given threshold. For example, the given threshold can be 50%, other value can be used.

In a variant of the embodiment, syntax or signaling can be adapted to the relaxed worst case. Advantageously, according to the embodiment defining average worst-case limitation described above, at the parsing stage, once the limitation has been reached inside the region R, then the signaling is adapted by limiting or forbidding the signaling of the coding modes or features corresponding to the worst case. For example, considering the worst case of blocks coding in intra mode with size 4x4, the decoder can count the number N_{CU} of CUs with size equal to 4x4 coded in intra in the region R and/or the number of reconstructed samples N_{S} coded with worst case (ex: number of reconstructed samples of CUs coded in intra mode and with size equal to 4x4) in the region R. If N_{CU} or N_{S} is superior to a given value or threshold (N_{CU}-max or N_{S}-max respectively), then the syntax flag(s) or index value(s) for signaling another CU mode corresponding to worst case is not present and is inferred to be false. Or in another example, the syntax flag(s) or index value(s) are changed to permitted value(s) that provide non-worst-case modes.

For example, in the example given above, the worst case of block coded in intra mode with size 4x4 is not more allowed and only blocks in intra mode with size higher than 4x4 are allowed (8x8 or 4x8, or above).

In another example, the worst case can be defined as block coded in inter mode with LIC feature enabled, once the number of blocks of the region or the number of reconstructed samples of the region encoded in inter mode with LIC enabled is superior to a given value or threshold (N_{CU}-max or N_{S}-max respectively), then LIC is disabled for the remaining blocks of the region. In a variant, for these remaining blocks, LIC is no more signaled and/or inferred to be false.

FIG. 8 illustrates an example of a method 800 for determining coding parameters for a block of a video according to the above variants of the embodiment. At 810, it is determined whether the particular coding mode or feature of coding mode is allowed for the block. This can be determined as explained above by counting the number of blocks in the region or number of reconstructed samples in the region that are encoded using the particular coding mode or feature and checking whether this number is above a threshold. If not, then at 830, the particular coding mode or feature is enabled for the block and can be used for encoding the block. However, its effective use for encoding the block can depend on a rate/distortion cost provided when evaluating the particular coding mode or feature for the block. Otherwise, if at 810, it is determined that the particular coding mode or feature is not allowed for the block, then at 820, the particular coding mode or feature is disabled for the block and cannot be used for encoding the block. In another variant, at 820, a value of the particular coding mode or feature is changed to another allowed value, that is a value that does not provide a worst-case mode.

FIG. 9 illustrates an example of a method 900 for determining coding parameters for a block of a video or for decoding coding parameters for a block of a video according to the variant of the embodiment wherein the syntax or signaling is adapted depending on whether the particular coding mode or feature of coding mode is allowed for the block. Steps of method 900 can be implemented in determining coding parameters for the block at 610 of FIG. 6 or for decoding coding parameters for the block at 710 of FIG. 7. At 910, it is determined whether the particular coding mode or feature of coding mode is allowed for the block. This can be determined as explained above by counting the number of blocks in the region or number of reconstructed samples in the region that have been encoded using the particular coding mode or feature and checking whether this number is above the threshold. If at 910, it is determined that the particular coding mode or feature is not allowed for the block, then at 920, the particular coding mode or feature is disabled for the block and cannot be used for encoding the block. Then at 930, a first signaling is used for encoding the coding parameters of the block that have been determined for the block, wherein the signaling of the particular coding mode or feature is omitted and inferred to be false. Otherwise, if at 910, it is determined that the particular coding mode or feature is allowed for the block, then at 940, the particular coding mode or feature is enabled for the block and can be used for encoding the block depending on the rate/distortion costs for example and at 950, a second signaling is used for encoding the coding parameters of the block that have been determined for the block, wherein the signaling of the particular coding mode or feature is not omitted, so that its value may be decoded on the decoder side.

According to another variant of this embodiment, the particular coding mode or feature corresponds to a specific coding mode that uses data of blocks of the image that are located outside the part of the image to which the current block belongs. In this variant, the determination of whether or not the particular coding mode or feature is allowed for a current block at 610 of FIG. 6 or 710 at FIG. 7 checks if the number of blocks of the part of the image or the number of reconstructed samples of the part of the image to which the current block belongs that are encoded using the specific coding mode is below or equals to the maximum allowed number N_{CU}-max or N_{S}-max. For example, the specific coding mode can be a coding mode using candidates re-ordering such as ARMC, or a coding mode that uses template for deriving intra prediction direction.

Another embodiment of the present principles provides a method wherein inter CUs dependency is limited to regions in the image. In this embodiment, one defines a data processing region (DPR). The picture or slice/tile is partitioned into several DPRs. The DPR may be a CTU, a group of CTUs, a line of CTUs, or smaller than CTU size. In one variant, the DPR can be defined by component, that is distinct partitioning into DPRs is defined depending on the component of the image. For example, the size of DPRs varies depending on the component (e.g. luminance or chrominance).

According to one variant of this embodiment, when coding CUs inside one DPR, these CUs cannot access some type of data of CUs that are located in another DPR. In orther words, when coding CUs inside one DPR, these CUs cannot access some type of data of CUs that are located outside the DPR. In this embodiment, this restriction only applies to some types of data, while other types of data of the CUs that are located outside the DPR can still be accessed. For example, the type of data that cannot be accessed outside the DPR can be the reconstructed samples, or the refined motion vector... In another example, the refined motion vector of CUs outside the DPR cannot be accessed but the non-refined motion vector of CUs outside the DPR can be accessed.

Other examples can be as follow:
- the CUs inside one DPR cannot access the reconstructed samples of the CUs located outside the DPR.
- the CUs inside one DPR cannot access the reconstructed samples of the CUs located outside the DPR that have been coded with a particular mode (ex: inter coding mode, or intra coding mode).
- the CUs inside one DPR cannot access the reconstructed samples of the CUs located outside the DPR at a given pipeline stage only. For example, the CUs inside the DPR cannot access the reconstructed samples of the CUs located outside the DPR for re-ordering the candidates built for one CU inside the DPR in inter mode and/or in intra mode (e.g. ARMC tool used in some intra or inter modes) or for deriving intra direction in intra prediction mode using a template of reconstructed samples (ex: TIMD mode).

In a variant, accessing data from previously processed CUs that are located outside the data processing region to which the current CU belongs is disabled if the type of the data belongs to a given set of types of data. Following the examples provided above, the given set of types of data comprises at least one of reconstructed samples of a previously processed CU, refined motion vector of a previously processed CU, reconstructed samples of a previously processed CU that has been coded using a given coding mode, samples of a previously processed CU obtained at a given pipeline stage for encoding or decoding the previously processed CU.

In another variant of this embodiment, only a relative amount of data (ex: number of reconstructed samples) or relative number of CU may access data outside a current DPR. In this variant, when coding CUs inside one DPR, these CUs can access data of CUs that are located in another DPR only if a number of CUs inside the DPR that have been previously encoded using data from CUs located outside the DPR is below a given value. Or in another variant, these CUs can access data of CUs that are located in another DPR only if a number of reconstructed samples inside the DPR that have been previously encoded using data from CUs located outside the DPR is below another given value. In these two variants, the access to data of CUs located outside the current DPR is not limited by the type of data that is accessed but by the amount of CUs or reconstructed samples of the current DPR that have previously accessed data of CUs outside the DPR.

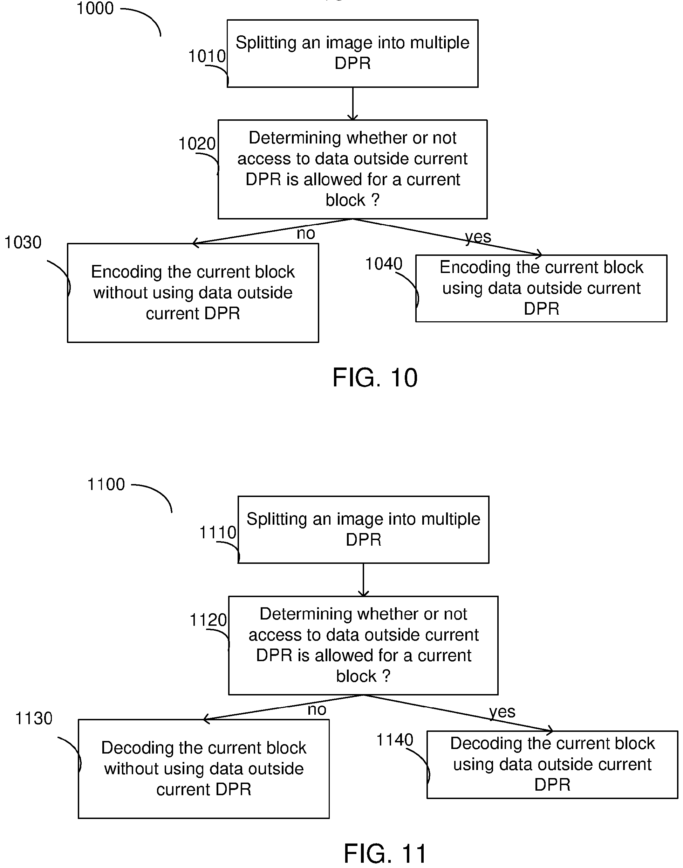

FIG. 10 illustrates an example of a method 1000 for encoding at least one block of a video according to this embodiment defining limited regions inter CUs dependency according to any one of the variants described above. At 1010, an image of the video is split into multiple DPRs. For encoding a block of a current DPR, at 1020, it is determined whether or not access to data outside the current DPR is allowed for the block. In one variant, the determination is based on the type of data that has to be accessed. In another variant, the determination is based on a number of reconstructed samples inside the DPR that have been previously encoded using data from blocks located outside the DPR or on a number of blocks inside the DPR that have been previously encoded using data from blocks located outside the DPR. If access to data outside the DPR is not allowed for the block, at 1030, the block is encoded without accessing the data outside the DPR, otherwise at 1040, the block is encoded using the data outside the DPR.

In the variant according to which access is based on the type of data, when access to data outside the DPR is not allowed for the block for one type of data, the block can be encoded using other type of data whose access outside the DPR is allowed.

For example, when access to reconstructed samples of blocks outside the DPR is not allowed, the block inside the DPR can still be encoded using another version of the samples of blocks outside the DPR, for example a version of the samples before a loop filter is applied. In another example, when access to refined motion vectors of blocks outside the DPR is not allowed, the block inside the DPR can still be encoded using another version of motion vector of blocks outside the DPR, for example a version of the motion vector that is not yet refined or not yet reconstructed (ex: motion vector predictors).

In another variant, the variant based on the type of data and the variant based on the number of blocks or reconstructed samples can be combined. For example, at 1020, it is determined that access to a specific type of data outside the DPR is allowed for the block only if a number of blocks inside the DPR that have been previously encoded using the specific type of data from blocks located outside the DPR is below a given value and/or if a number of reconstructed samples inside the DPR that have been previously encoded using the specific type of data from blocks located outside the DPR is below another given value.

FIG. 11 illustrates an example of a method 1100 for decoding at least one block of a video according to this embodiment defining limited regions inter CUs dependency according to any one of the variants described above. At 1110, an image of the video is split into multiple DPRs. For decoding a block of a current DPR, at 1120, it is determined whether or not access to data outside the current DPR is allowed for the block. The same determination that was made on the encoder is made at the decoder. In one variant, the determination is based on the type of data that has to be accessed. In another variant, the determination is based on a number of reconstructed samples inside the DPR that have been previously decoded using data from blocks located outside the DPR or on a number of blocks inside the DPR that have been previously decoded using data from blocks located outside the DPR. In another variant, the determination is based on the two previous variants. If access to data outside the DPR is not allowed for the block, at 1130, the block is decoded without accessing the data outside the DPR, otherwise at 1140, the block is decoded using the data outside the DPR.

In another variant of FIG. 10 and FIG. 11, responsive to a determination that encoding or decoding the block in a current DPR comprises selecting for the block a candidates from among a list of candidates and a re-ordering of the candidates of the list uses reconstructed samples of previously processed blocks located outside the current DPR, re-ordering of the candidates of the list is disabled for the block.

In another variant of FIG. 10 and FIG. 11, responsive to a determination that encoding or decoding the block in a current DPR comprises selecting for the block a candidates from among a list of candidates and a re-ordering of the candidates of the list uses reconstructed samples of previously processed blocks located outside the current DPR, re-ordering of the candidates of the list is enabled for the block using a version of the samples of previously processed blocks located outside the data processing region to which the block belongs that are obtained at a given pipeline decoding stage.

In another variant of FIG. 10 and FIG. 11, responsive to a determination that encoding or decoding the block in a current DPR comprises determining an intra direction prediction for the block using a template of reconstructed samples belonging to one or more previously processed blocks located outside the current DPR, the reconstructed samples of the previously processed blocks located outside the current DPR are not used or in a further variant the determining of the intra direction prediction for the block using the template is disabled, or in another variant the determining of the intra direction prediction for the block uses a version of the samples of previously processed blocks located outside the current DPR that are obtained at a given pipeline decoding stage.

The embodiment defining limited regions inter CUs dependency in any of these variants described above has the advantage to relax the pipeline dependency constraint (due to access of data from previously reconstructed CU) for CUs accessing data from other CUs located in a same DPR, but it keeps the constraint for CUs accessing data from other CUs located in another DPR.

According to another embodiment, the region or part of the image defined in the embodiment described above that defines average worst-case limitation can be same as a DPR defined above.

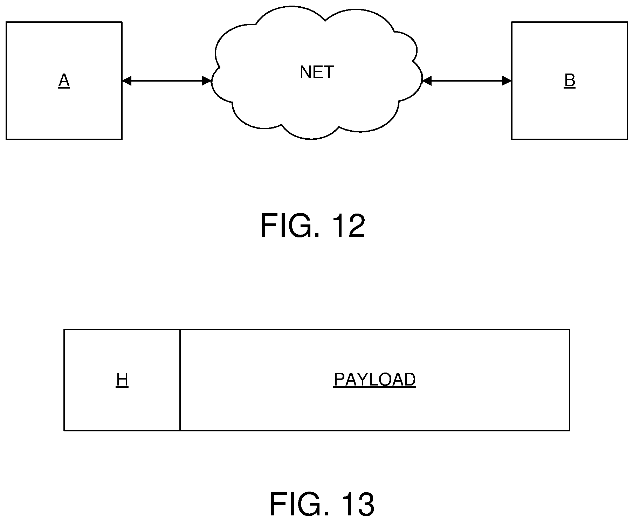

In an embodiment, illustrated in FIG. 12, in a transmission context between two remote devices A and B over a communication network NET, the device A comprises a processor in relation with memory RAM and ROM which are configured to implement a method for encoding an image or a video according to any one of the embodiments described herein and the device B comprises a processor in relation with memory RAM and ROM which are configured to implement a method for decoding an image or a video according to any one of the embodiments described herein. In accordance with an example, the network is a broadcast network, adapted to broadcast/transmit a coded video from device A to decoding devices including the device B.

FIG. 13 shows an example of the syntax of a signal transmitted over a packet-based transmission protocol. Each transmitted packet P comprises a header H and a payload PAYLOAD. In some embodiments, the payload PAYLOAD may comprise data representative of at least one part of an image or video encoded according to any one of the embodiments described above. The payload can also comprise any signaling as described above. For example, the signal comprises one or blocks of the image or video which are encoded using the first signaling or the second signaling as described in relation with FIG. 9 depending on whether or not a particular coding mode or feature is allowed for the block.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, entropy decoding a sequence of binary symbols to reconstruct image or video data.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, determining re-sampling filter coefficients, re-sampling a decoded picture.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art. Note that the syntax elements as used herein, are descriptive terms. As such, they do not preclude the use of other syntax element names.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, picture header or a slice header), or an SEI message. Other manners are also available, including for example manners common for system level or application level standards such as putting the information into one or more of the following:
a. SDP (session description protocol), a format for describing multimedia communication sessions for the purposes of session announcement and session invitation, for example as described in RFCs and used in conjunction with RTP (Real-time Transport Protocol) transmission.
b. DASH MPD (Media Presentation Description) Descriptors, for example as used in DASH and transmitted over HTTP, a Descriptor is associated to a Representation or collection of Representations to provide additional characteristic to the content Representation.
c. RTP header extensions, for example as used during RTP streaming.
d. ISO Base Media File Format, for example as used in OMAF and using boxes which are object-oriented building blocks defined by a unique type identifier and length also known as 'atoms' in some specifications.
e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Some embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

A number of embodiments has been described herein. Features of these embodiments can be provided alone or in any combination, across various claim categories and types.

## Claims

1. A method, comprising encoding at least one block of at least one part of an image of a video including:
determining coding parameters for the at least one block among a set of coding parameters, wherein for at least one first coding parameter of the set, the at least one first coding parameter is allowed for encoding the at least one block when a percentage of blocks of the at least one part of the image or a percentage of reconstructed samples of the at least one part of the image that have been previously encoded using the at least one first coding parameter is below or equals a first given value,
encoding the at least one block using the determined coding parameters.

2. An apparatus comprising one or more processors operable to encode at least one block of at least one part of an image of a video including:
determining coding parameters for the at least one block among a set of coding parameters, wherein for at least one first coding parameter of the set, the at least one first coding parameter is allowed for encoding the at least one block when a percentage of blocks of the at least one part of the image or a percentage of reconstructed samples of the at least one part of the image that have been previously encoded using the at least one first coding parameter is below or equals a first given value,
encoding the at least one block using the determined coding parameters.

3. A method comprising decoding at least one block of at least one part of an image of a video including:
decoding coding parameters for the at least one block, the coding parameters being part of a set of coding parameters, wherein for at least one first coding parameter of the set, the at least one first coding parameter is allowed for decoding the at least one block when a percentage of blocks of the at least one part of the image or a percentage of reconstructed samples of the at least one part of the image that have been previously decoded using the at least one first coding parameter is below or equals a first given value,
reconstructing the at least one block using the decoded coding parameters.

4. An apparatus comprising one or more processors operable to decode at least one block of at least one part of an image of a video including:
decoding coding parameters for the at least one block, the coding parameters being part of a set of coding parameters, wherein for at least one first coding parameter of the set, the at least one first coding parameter is allowed for decoding the at least one block when a percentage of blocks of the at least one part of the image or a percentage of reconstructed samples of the at least one part of the image that have been previously decoded using the at least one first coding parameter is below or equals a first given value,
reconstructing the at least one block using the decoded coding parameters.

5. The method of claim 1 or 3 or the apparatus of claim 2 or 4, wherein the first given value is a bitstream specification conformance constraint defined in a profile or level specification of a video coding standard.

6. The method of any one of claims 1, 3 or 5 or the apparatus of any one of claims 2 or 4-5, wherein the at least one first coding parameter comprises at least one of: a first size of the block when the block is coded in intra mode, a second size of the block when the block is coded in inter mode, a coding mode that uses bi-prediction, a specific coding mode, a coding mode that uses reconstructed samples neighboring the block, a coding mode that uses a number of MAC per pixels that is above a second given value, a coding mode that uses an amount of memory that is above a third given value, a coding mode that uses a percentage of reconstructed samples coded in intra mode or in inter mode that is above a fourth given value, a coding mode that uses blocks coded in inter mode with local illumination compensation, an inter coding mode that has dependencies to other previously reconstructed blocks coded in inter mode, an intra mode in a P or B slice.

7. The method of any one of claims 1, 3 or 5 or the apparatus of any one of claims 2 or 4-5, wherein the at least one first coding parameter is a coding mode that uses data from blocks of the image that are located outside the at least one part of the image.

8. The method of any one of claims 1, 3 or 5-7 or the apparatus of any one of claims 2 or 4-7, wherein responsive to a determination that the percentage of blocks of the at least one part of the image or the percentage of reconstructed samples of the at least one part of the image that have been previously encoded or decoded using the at least one first coding parameter is above the first given value, signaling a use of the at least one first coding parameter for the at least one block is omitted and the use of the at least one first coding parameter is inferred to be disabled.

9. The method of any one of claims 1, 3 or 5-8 or the apparatus of any one of claims 2 or 4-8, wherein responsive to a determination that the percentage of blocks of the at least one part of the image or the percentage of reconstructed samples of the at least one part of the image that have been previously encoded or decoded using the at least one first coding parameter is above the first given value, the first coding parameter is disabled for the at least one block.

10. The method of any one of claims 1, 3 or 5-9 or the apparatus of any one of claims 2 or 4-9, wherein a value of the first coding parameter is a value that provides a worst-case mode when encoding or decoding the at least one block using the first coding parameter.

11. The method or the apparatus of claim 10, wherein responsive to a determination that the percentage of blocks of the at least one part of the image or the percentage of reconstructed samples of the at least one part of the image that have been previously encoded or decoded using the at least one first coding parameter is above the first given value, the value of the first coding parameter is changed to another value that does not provide a worst-case mode when encoding or decoding the at least one block using the first coding parameter.

12. The method of any one of claims 1, 3 or 5-11 or the apparatus of any one of claims 2 or 4-11, wherein the at least one part of the image is a data processing region that comprises one of a coding tree unit, a group of coding tree units, a line of coding tree units, or a group of blocks of the image.

13. A computer program product including instructions for causing one or more processors to carry out the method of any of claims 1, 3 or 5-21, 23 or 25-32.

14. A non-transitory computer readable medium storing executable program instructions to cause a computer executing the program instructions to perform the method of any of claims 1, 3 or 5-21, 23 or 25-32.

15. A device comprising:
an apparatus according to claim 4 or 24; and
at least one of (i) an antenna configured to receive or transmit a signal, the signal including data representative of the video, (ii) a band limiter configured to limit the signal to a band of frequencies that includes the data representative of the video, or (iii) a display configured to display the video.
